# EUROPEAN PATENT SPECIFICATION

(11) **EP 3 425 298 B1**
(45) Date of publication and mention of the grant of the patent: **09.12.2020**
(21) Application number: 17759696.2
(22) Date of filing: 17.02.2017
(51) Int. Cl.: G06K 19/07

(54) **AIR CONDITIONING SYSTEM**
KLIMATISIERUNGSSYSTEM
SYSTÈME DE CLIMATISATION

(30) Priority: 04.03.2016 JP 2016042109
(43) Date of publication of application: 09.01.2019
(73) Proprietor: Mitsubishi Heavy Industries, Ltd., Tokyo 108-8215 (JP)
(72) Inventor: ENYA, Atsushi, Tokyo 108-8215 (JP)
(74) Representative: Cabinet Beau de Loménie
(86) International application number: PCT/JP2017/006006
(87) International publication number: WO 2017/150227

(56) References cited:
- JP-A- 2001 141 279
- JP-A- 2004 169 989
- JP-A- 2005 273 196
- JP-A- 2006 283 999
- JP-A- 2008 025 234
- JP-A- 2012 021 697
- JP-A- 2014 142 756
- US-A1- 2016 320 083

## Description

### Technical Field

The present invention relates to an air conditioning system.

### Background Art

In air conditioners, it is necessary to replace failed devices or components in a case where abnormalities or failures occurs in the devices or components that are constituent elements. Although the component replacement is generally performed by air conditioner manufacturers, users who want to keep costs low may perform the component replacement themselves. In this case, there is a concern that relatively inexpensive devices or components other than genuine products may be attached. JP 2012 021697 discloses a wiring system of an air conditioning, JP 2005 273196 A discloses an identification device for identifying a genuine replacement part using IC tags, JP 2008 025234 discloses component monitoring device using IC tags, JP 2006 283999 A discloses a remote controller for an air conditioner setting validity of a user operation based on information stored on a storage card.

In order to detect the use of such devices or components that are not genuine products, it is suggested that whether or not products are genuine is discriminated, for example, by attaching an RFID tag to a device or component that is a genuine product in which component information or the like is stored and reading information on this RFID tag (for example, refer to PTL 1).

### Citation List

### Patent Literature

[PTL 1] Japanese Unexamined Patent Application Publication No. 2007-22467
[PTL 2] Japanese Unexamined Patent Application Publication No. 2000-84227
[PTL 3] Japanese Unexamined Patent Application Publication No. 2004-62675
[PTL 4] Japanese Unexamined Patent Application Publication No. 2004-93693
[PTL 5] Japanese Unexamined Patent Application Publication No. 2007-193517
[PTL 6] Japanese Unexamined Patent Application Publication No. 2010-201022

### Summary of Invention

### Technical Problem

However, since the RFID tag can be detached, during the component replacement, it is possible to detach the RFID tag attached to the genuine product and stick this RFID tag on a component that is not a genuine product. In such a case, whether or not the product is genuine cannot be accurately discriminated only by reading the information from the RFID tag.

In PTL 1, in order to prevent detachment of the RFID tag, embedding the RFID tag is suggested. However, a cost increase is caused in this technique.

The invention has been made in view of such circumstances, and an object thereof is to provide an air conditioning system capable of detecting the use of devices or components that are not genuine products, even when a user engages in counterfeiting by attaching an RFID tag, which was attached to a genuine product, to a device or component that is not a genuine product.

### Solution to Problem

A first aspect of the invention according to claims 1, 2, 3 and 4 is an air conditioning system in which one outdoor unit and at least one indoor unit are connected to each other by a common refrigerant pipe. The air conditioning system includes a sensor configured to detect information relating to a state of a device, a state of a functional component, or a state of a refrigerant, the device, the functional component, and the refrigerant being provided in the outdoor unit or the indoor unit; an active-type short-distance wireless device that is connected to the sensor, is configured to receive sensor information from the connected sensor and is configured to transmit the sensor information or information relating to the sensor information; and an information processing unit that is provided so as to be capable of communicating with the short-distance wireless device and that is configured to receive the sensor information or the information relating to the sensor information from the short-distance wireless device. The information processing unit is provided with a determination unit that is configured to, on the basis of the sensor information or the information relating to the sensor information, determine whether or not the device or the functional component that affects the sensor itself or the sensor information is a genuine product.

According to the above air conditioning system, the information relating to the state of the device provided in the outdoor unit or the indoor unit, the state of the functional component, or the state of the refrigerant is detected by the sensor. The sensor and the short-distance wireless device are connected to each other, and the sensor information is received by the short-distance wireless device. The short-distance wireless device transmits the received sensor information or the information relating to the sensor information to the information processing device. The information processing device includes the determination unit, and the determination unit determines whether or not the device or the functional component that affects the sensor itself or the sensor information is a genuine product on the basis of the sensor information or the information relating to the sensor information.

In the above air conditioning system, the determination unit may be configured to compare sensor information items before and after component replacement during a stable operation in which a rotational speed of a compressor is maintained at a fixed value in a case where replacement of the device, the functional component, or the sensor is performed, and to determine that the replaced device, the replaced functional component, or the replaced sensor is not a genuine product in a case where a variation equal to or more than a variation in characteristics in a case where components that are genuine products are used appears in a result of the comparison.

According to the above air conditioning system, the sensor values before and after the component replacement during the stable operation in which the rotational speed of the compressor is maintained at the fixed value in a case where the replacement of the component is performed are compared with each other, and it is determined that a device, a component, or a sensor other than a genuine product is being used in a case where a larger difference than the variation in characteristics of genuine products appears in the sensor values before and after the replacement.

In the air conditioning system, the sensor may be a valve opening-closing sensor configured to detect opening-closing information of an electromagnetic valve. The short-distance wireless device may be configured to receive the opening-closing information of the electromagnetic valve as the sensor information, and the determination unit may be configured to determine that the electromagnetic valve is not a genuine product in a case where the number of times of opening and closing of the electromagnetic valve is equal to or more than a predetermined number of times set to a value larger than a normal number of times of opening and closing of the genuine product within a predetermined period.

According to the above air conditioning system, the short-distance wireless device receives the opening-closing information of the electromagnetic valve from the valve opening-closing sensor and transmits this sensor information or the information relating to the sensor information to the determination unit. The determination unit determines that the electromagnetic valve is not a genuine product in a case where the number of times of opening and closing of the electromagnetic valve within the predetermined period is equal to or more than the predetermined number of times set to a value larger than the normal number of times of opening and closing of the genuine product.

In the above air conditioning system, the sensor may be a valve opening degree sensor configured to detect a valve opening degree of an electromagnetic valve, the short-distance wireless device may be configured to receive valve opening degree information of the electromagnetic valve as the sensor information, and the determination unit may be configured to determine that the electromagnetic valve is not a genuine product in a case where a total number of pulses applied to bring the electromagnetic valve into a fully open state from a fully closed state is equal to or more than a predetermined threshold value set to a value larger than a total number of pulses of a genuine product.

According to the above air conditioning system, the short-distance wireless device receives the valve opening degree information of the electromagnetic valve from the valve opening degree sensor and transmits this sensor information or the information relating to the sensor information to the determination unit. The determination unit determines that the electromagnetic valve is not a genuine product in a case where the total number of pulses applied to bring the electromagnetic valve into the fully open state from the fully closed state is equal to or more than the predetermined threshold value set to the value larger than the total number of pulses of the genuine product.

In the above the air conditioning system, the sensor may be a discharge-side temperature sensor configured to detect a discharge-side temperature of a compressor, or a suction-side temperature sensor configured to detect a suction-side temperature of the compressor, the short-distance wireless device may be configured to receive the discharge-side temperature or the suction-side temperature as the sensor information, and the determination unit may be configured to determine that a four-way valve is not a genuine product in a case where the number of times at which the discharge-side temperature exceeds a predetermined temperature threshold value set to a temperature higher than a discharge-side temperature of a genuine product is equal to or more than a predetermined number of times within a predetermined period, or in a case where the number of times at which a difference between the suction-side temperature and a suction pressure saturation temperature exceeds a predetermined temperature threshold value set to a temperature higher than a temperature difference in a genuine product is equal to or more than a predetermined number of times within a predetermined period.

According to the above air conditioning system, the short-distance wireless device receives the discharge-side temperature from the discharge-side temperature sensor or receives the suction-side temperature from the suction-side temperature sensor, and transmits this sensor information or the information relating to the sensor information to the determination unit. The determination unit determines that the four-way valve is not a genuine product in a case where the number of times at which the discharge-side temperature exceeds the predetermined temperature threshold value set to the temperature higher than the discharge-side temperature of the genuine product within the predetermined period is equal to or more than the predetermined number of times, or in a case where the number of times at which the difference between the suction-side temperature and the suction pressure saturation temperature exceeds the predetermined temperature threshold value set to the temperature higher than the temperature difference in a genuine product within the predetermined period is equal to or more than the predetermined number of times.

In the above air conditioning system, the information processing device is, for example, an air conditioning control device configured to control the entire air conditioning.

In the above air conditioning system, the information processing device is, for example, a portable terminal carried by a person in charge of performing maintenance checks.

### Advantageous Effects of Invention

According to the invention, there is exhibited an effect capable of detecting the use of devices or components that are not genuine products, even when a user engages in counterfeiting by attaching an RFID tag, which was attached to a genuine product, to a device or component that is not a genuine product.

### Brief Description of Drawings

FIG. 1 is a view schematically illustrating a refrigerant system related to an embodiment of the invention.
FIG. 2 is an electrical configuration view of an air conditioning system related to the embodiment of the invention.
FIG. 3 is a functional block diagram illustrating functions realized by an RFID tag and an air conditioning control device related to the embodiment of the invention.

### Description of Embodiments

Hereinbelow, an air conditioning system related to an embodiment of the invention will be described with reference to the drawings.

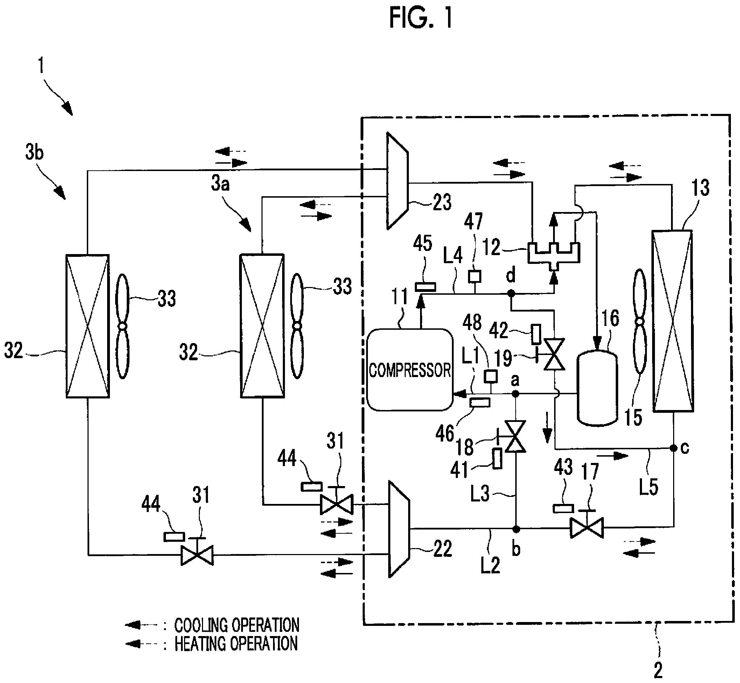

Fig. 1 is a view illustrating schematically a refrigerant system of the air conditioning system 1 related to the present embodiment. As illustrated in Fig. 1, the air conditioning system 1 includes one outdoor unit 2, and a plurality of indoor units 3a and 3b connected to the outdoor unit 2 by a common refrigerant pipe. Although a configuration in which two indoor units 3a and 3b are connected to one outdoor unit 2 is illustrated for convenience in Fig. 1, the number of outdoor units to be installed and the number of indoor units to be connected are not limited.

The outdoor unit 2 includes, for example, a compressor 11 that compresses and delivers a refrigerant, a four-way valve 12 that switches a circulation direction of the refrigerant during cooling and heating, an outdoor heat exchanger 13 that performs heat exchange between the refrigerant and ambient air, an outdoor fan 15, an accumulator 16 that is provided on a suction-side pipe L1 of the compressor 11 for the purpose of gas-liquid separation or the like of the refrigerant, an expansion valve 17 for heating, and the like, as main components.

The indoor units 3a and 3b include an expansion valve 31 for cooling, an indoor heat exchanger 32, an indoor fan 33, and the like, respectively, as main components.

In such an air conditioning system 1, in the case of a cooling operation, the refrigerant delivered from the outdoor unit 2 is allowed to be branched and supplied to the indoor units 3a and 3b by a header 22, and the return refrigerant from the indoor units 3a and 3b are allowed to be joined together in a header 23 and supplied to the outdoor unit 2. During heating, a reverse refrigerant flow is formed.

The outdoor unit 2 includes a liquid bypass pipe L3 that connects a connection point a provided in a suction-side pipe L1 connecting the accumulator 16 and the compressor 11 and a connection point b provided in a refrigerant pipe L2 connecting the outdoor heat exchanger 13 and the header 22, and a hot gas bypass pipe L5 that connects a connection point c provided in the refrigerant pipe L2 and a connection point d provided in a discharge-side pipe L4 of the compressor 11. The liquid bypass pipe L3 is provided with a liquid bypass valve 18, and the hot gas bypass pipe L5 is provided with a hot gas bypass valve 19.

The air conditioning system 1 is provided with a plurality of sensors that detect information relating to the states of devices provided in the outdoor unit 2 and the individual indoor units 3a and 3b, the states of functional components, or the state of the refrigerant. In the present embodiment, the "devices" mean devices provided in the outdoor unit 2 or the indoor units 3a and 3b in order to exhibit the functions of the air conditioning system 1, and mean, for example, the compressor 11, the outdoor heat exchanger 13, the outdoor fan 15, the accumulator 16, a gas-liquid separator (not illustrated), the indoor heat exchanger 32, the indoor fan 33, and the like. In the present embodiment, the "functional components" mean components provided in the outdoor unit 2 or the indoor units 3a and 3b in order to exhibit the functions of the air conditioning system 1, and mean, for example, various electromagnetic valves, such as the four-way valve 12, the expansion valve 17 for heating, the liquid bypass valve 18, the hot gas bypass valve 19, and the expansion valve 31 for cooling, and the like. As the plurality of sensors, for example, a valve opening-closing sensor (for example, an ON/OFF switch) 41 that detects the opening and closing of the liquid bypass valve 18, a valve opening-closing sensor 42 (for example, an ON/OFF switch) that detects opening and closing of the hot gas bypass valve 19, a valve opening degree sensor 43 that detects the valve opening degree of the expansion valve 17 for heating, a valve opening degree sensor 44 that detects the valve opening degree of the expansion valve 31 for cooling, a discharge-side temperature sensor 45 that measures the discharge-side temperature of the compressor 11, a suction-side temperature sensor 46 that measures the suction-side temperature of the compressor 11, a discharge-side pressure sensor 47 that measures the discharge-side pressure of the compressor, a suction-side pressure sensor 48 that measures a suction-side pressure, and the like is provided in the air conditioning system 1.

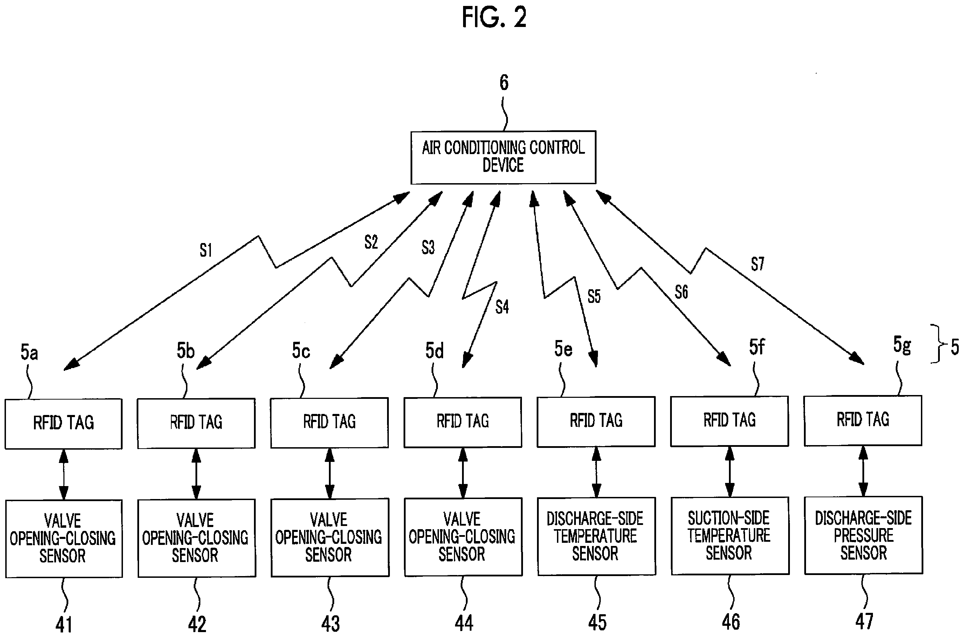

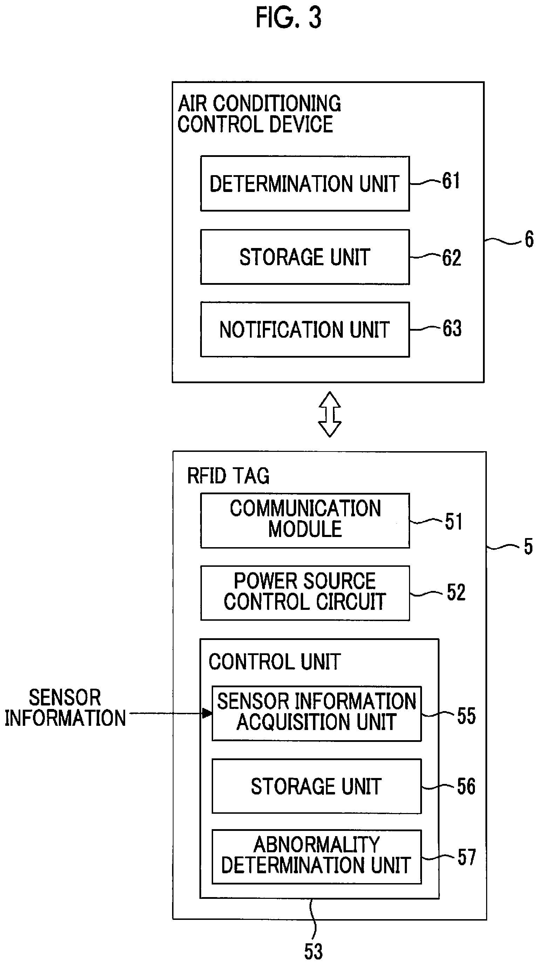

FIG. 2 is a view illustrating an electrical configuration of the air conditioning system related to the present embodiment, and FIG. 3 is a view illustrating RFID tags 5 (hereinafter, reference sign "5" is simply attached when referring to all the RFID tags, and reference signs "5a", "5b", and the like are attached when referring to the individual RFID tags) related to the present embodiment.

As illustrated in FIG. 2, the RFID tags (short-distance wireless devices) 5 are connected to the various sensors 41 to 48, respectively. Although a case where the sensors 41 to 48 and the RFID tags 5 are connected to each other in a one-to-one relationship will be described in the present embodiment, the invention is not limited to this aspect. For example, one RFID tag 5 may be provided corresponding to a plurality of sensors, or the RFID tags 5 may be provided for the outdoor unit 2 and the indoor units 3a and 3b, respectively.

As illustrated in FIG. 2, for example, the RFID tags 5a to 5f are respectively provided corresponding to the valve opening-closing sensor 41, the valve opening-closing sensor 42, the valve opening degree sensor 43, the valve opening degree sensor 44, the discharge-side temperature sensor 45, the suction-side temperature sensor 46, and the suction-side pressure sensor 48 (not illustrated in FIG. 2), and discharge-side pressure sensor 47.

As illustrated in FIG. 3, each RFID tag 5 includes a communication module (wireless communication unit) 51, a power source control circuit 52, and a control unit 53. The RFID tag 5 is of, for example, an active tag type, and wirelessly performs transfer of information with the air conditioning control device (information processing device) 6 via the communication module 51. Examples of the frequencies of radio waves include a 135 kHz band, a 13.56 MHz band, an 800 MHz band, a 1.5 GHz band, a 1.9 GHz band, a 2.45 GHz band, a 5.8 GHz band, a UHF band, and the like. A radio-communicable distance is about several centimeters to several tens of meters. By placing a relay device on the way, communication becomes possible even in a case where there is an obstruction that hinders the communication on the way. As a result, it is also possible to realize communication of a long distance of several tens of meters or more.

The power source control circuit 52 converts, for example, electrical power supplied from a power source within the air conditioning system 1 into a suitable voltage or the like to supply the converted voltage to the communication module 51 or the control unit 53.

The control unit 53 includes a sensor information acquisition unit 55, a storage unit 56, and an abnormality detection unit 57. The sensor information acquisition unit 55 receives, for example, sensor information from the sensors connected thereto by wire. Information relating to the connected sensors, and various conditions, threshold values, and the like that the information and the abnormality detection unit 57 use for determination are stored in the storage unit 56. The abnormality detection unit 57 performs abnormality determination on the basis of the received sensor information and transmits abnormality signals to the air conditioning control device 6 via the communication module 51 in a case where abnormalities are determined.

The air conditioning control device 6 comprehensively performs the operation control of the air conditioning system 1, and includes, for example, an auxiliary storage in which a CPU, a main memory, and various programs are stored. The auxiliary storage is a computer-readable recording medium, and is, for example, a magnetic disk, a magnetic-optical disk, a CD-ROM, a DVD-ROM, a semiconductor memory, or the like. Various programs are stored in this auxiliary storage, and the CPU realizes heating operation, cooling operation, defrosting operation, or the like by making the main memory read and execute the programs from the auxiliary storage. Moreover, the air conditioning control device 6 also performs genuine product determination control in which components that are not genuine products are discriminated on the basis of abnormality signals received from the RFID tags 5 (5a to 5g) in addition to performing, for example, rotational speed control of a compressor 11, rotational speed control of the outdoor fan 15, valve opening degree control of the expansion valve 17 for heating, rotational speed control of the indoor fan 33, valve opening degree control of the expansion valve 31 for cooling, and the like.

The air conditioning control device 6 includes, for example, a determination unit 61, a storage unit 62, and a notification unit 63, as components relating to genuine product discrimination control. The determination unit 61 discriminates components that are not genuine products on the basis of received abnormality signals in a case where the abnormality signals are received from the RFID tags 5. The storage unit 62 stores abnormality information received from the RFID tags 5, discrimination results of the determination unit 61, and the like. In a case where the determination unit 61 determines products are not genuine, the notification unit 63 notifies an air conditioner manufacturer of the event. The notification unit 63 is constituted of, for example, a communication device that transmits information, showing that components that are not genuine products are used, to a remote monitoring device that remotely monitors the air conditioning system 1.

Next, a genuine product discrimination function related to the present embodiment will be described in detail with reference to FIGS. 2 and 3.

The RFID tag 5a acquires information relating to the opening and closing of the liquid bypass valve 18 from the valve opening-closing sensor 41. For example, in a case where the liquid bypass valve 18 is open, an ON signal (a digital signal "1") is input, and in a case where the liquid bypass valve 18 is closed, an OFF signal (a digital signal "0") is input. This sensor information is input to the abnormality detection unit 57 via the sensor information acquisition unit 55. The abnormality detection unit 57 detects an abnormality from the sensor information on the basis of the conditions stored in the storage unit 56. Specifically, in a case where the number of times of opening and closing of the liquid bypass valve 18 is equal to or more than a predetermined number of times set to a value larger than the normal number of times of opening and closing of a genuine product within a predetermined period, for example, in a case where the opening and closing of the liquid bypass valve 18 are performed 10 times or more in 1 hour, an abnormality is determined. In a case where the abnormality is detected by the abnormality detection unit 57, an abnormality signal S1 is transmitted to the air conditioning control device 6 via the communication module 51. In the air conditioning control device 6, the abnormality signal S1 is input to the determination unit 61. If the abnormality signal S1 is received, the determination unit 61 determines that the liquid bypass valve 18 is not a genuine product, and outputs the determination result to the notification unit 63. Accordingly, the notification unit 63 notifies the air conditioner manufacturer of the fact that the liquid bypass valve 18 is not a genuine product. The determination result determined by the determination unit 61 and the information received from the RFID tag 5a are stored in the storage unit 62, and are used for future analysis or the like.

The RFID tag 5b acquires information relating to the opening and closing of the hot gas bypass valve 19 from the valve opening-closing sensor 42. For example, in a case where the hot gas bypass valve 19 is open, an ON signal (a digital signal "1") is input, and in a case the hot gas bypass valve 19 is closed, an OFF signal (a digital signal "0") is input. This sensor information is input to the abnormality detection unit 57 via the sensor information acquisition unit 55. The abnormality detection unit 57 detects an abnormality from the sensor information on the basis of the conditions stored in the storage unit 56. Specifically, in a case where the number of times of opening and closing of the hot gas bypass valve 19 is equal to or more than a predetermined number of times set to a value larger than the normal number of times of opening and closing of a genuine product within a predetermined period, for example, in a case where the opening and closing of the hot gas bypass valve 19 are performed 10 times or more in 1 hour, an abnormality is determined. In a case where the abnormality is detected by the abnormality detection unit 57, an abnormality signal S2 is transmitted to the air conditioning control device 6 via the communication module 51. In the air conditioning control device 6, the abnormality signal S2 is input to the determination unit 61. If the abnormality signal S2 is received, the determination unit 61 determines that the hot gas bypass valve 19 is not a genuine product, and outputs the determination result to the notification unit 63. Accordingly, the notification unit 63 notifies the air conditioner manufacturer of the fact that the hot gas bypass valve 19 is not a genuine product. The determination result determined by the determination unit 61 and the information received from the RFID tag 5b are stored in the storage unit 62, and are used for future analysis or the like.

The RFID tag 5c acquires valve opening degree information on the expansion valve 17 for heating from the valve opening degree sensor 43. This sensor information is input to the abnormality detection unit 57 via the sensor information acquisition unit 55. The abnormality detection unit 57 detects an abnormality from the sensor information on the basis of the conditions stored in the storage unit 56. Specifically, in a case where a total number of pulses applied to bring the expansion valve 17 for heating into a fully open state from a fully closed state is larger than a predetermined threshold value (for example, a value arbitrarily determined between 100 pulses or more and 500 pulses or less) set to a value larger than the normal value of a genuine product, an abnormality is determined. In a case where the abnormality is detected by the abnormality detection unit 57, an abnormality signal S3 is transmitted to the air conditioning control device 6 via the communication module 51. In the air conditioning control device 6, the abnormality signal S3 is input to the determination unit 61. If the abnormality signal S3 is received, the determination unit 61 determines that the expansion valve 17 for heating is not a genuine product, and outputs the determination result to the notification unit 63. Accordingly, the notification unit 63 notifies the air conditioner manufacturer of the fact that the expansion valve 17 for heating is not a genuine product. The determination result determined by the determination unit 61 and the information received from the RFID tag 5c are stored in the storage unit 62, and are used for future analysis or the like.

In the present embodiment, it is determined whether or not there is an abnormality on the basis of the valve opening degree, and the abnormality may be determined on the basis of the temperature of a spot that affects the expansion valve 17 for heating, for example, heat exchanger temperature or suction temperature.

The RFID tag 5d acquires valve opening degree information on the expansion valve 31 for cooling from the valve opening degree sensor 44. This sensor information is input to the abnormality detection unit 57 via the sensor information acquisition unit 55. The abnormality detection unit 57 detects an abnormality from the sensor information on the basis of the conditions stored in the storage unit 56. Specifically, in a case where a total number of pulses applied to bring the expansion valve 31 for cooling into a fully open state from a fully closed state is larger than a predetermined threshold value (for example, a value arbitrarily determined between 100 pulses or more and 500 pulses or less) set to a value larger than the normal value of a genuine product, an abnormality is determined. In a case where the abnormality is detected by the abnormality detection unit 57, an abnormality signal S4 is transmitted to the air conditioning control device 6 via the communication module 51. In the air conditioning control device 6, the abnormality signal S4 is input to the determination unit 61. If the abnormality signal S4 is received, the determination unit 61 determines that the expansion valve 31 for cooling is not a genuine product, and outputs the determination result to the notification unit 63. Accordingly, the notification unit 63 notifies the air conditioner manufacturer of the fact that the expansion valve 31 for cooling is not a genuine product. The determination result determined by the determination unit 61 and the information received from the RFID tag 5d are stored in the storage unit 62, and are used for future analysis or the like.

The RFID tag 5e acquires the discharge-side temperature of the compressor 11 from the discharge-side temperature sensor 45. This sensor information is input to the abnormality detection unit 57 via the sensor information acquisition unit 55. The abnormality detection unit 57 detects an abnormality from the sensor information on the basis of the conditions stored in the storage unit 56. Specifically, in a case where the number of times at which the discharge-side temperature exceeds a predetermined threshold value set to a value larger than the normal value of a genuine product is equal to or more than a predetermined number of times within a predetermined period, for example, in a case where the number of times at which the discharge-side temperature exceeds 100° C is counted 10 times or more in 1 hour in a case where the discharge-side temperature is detected at intervals of 5 minutes), an abnormality is determined. In a case where the abnormality is detected by the abnormality detection unit 57, an abnormality signal S5 is transmitted to the air conditioning control device 6 via the communication module 51. In the air conditioning control device 6, the abnormality signal S5 is input to the determination unit 61. If the abnormality signal S5 is received, the determination unit 61 determines that the four-way valve 12 is not a genuine product, and outputs the determination result to the notification unit 63. Accordingly, the notification unit 63 notifies the air conditioner manufacturer of the fact that the four-way valve 12 is not a genuine product. The determination result determined by the determination unit 61 and the information received from the RFID tag 5e are stored in the storage unit 62, and are used for future analysis or the like.

The RFID tag 5f acquires the suction-side temperature of the compressor 11 from the suction-side temperature sensor 46 and acquires the suction-side pressure of the compressor 11 from the suction-side pressure sensor 48. This sensor information is input to the abnormality detection unit 57 via the sensor information acquisition unit 55. The abnormality detection unit 57 detects an abnormality from the sensor information on the basis of the conditions stored in the storage unit 56. In a case where the number of times at which a difference between the suction-side temperature and a suction pressure saturation temperature (a value converted from the suction-side pressure) is equal to or lower than a predetermined threshold value set to a value smaller than the normal values of a genuine product is equal to or more than a predetermined number of times, within a predetermined period, for example, in a case where the number of times at which the difference between the suction-side temperature and the suction pressure saturation temperature is lower than 5°C in a case where the suction-side temperature is detected at intervals of 5 minutes is counted 10 times or more in 1 hour, an abnormality is determined.

In a case where the abnormality is detected by the abnormality detection unit 57, an abnormality signal S6 is transmitted to the air conditioning control device 6 via the communication module 51. In the air conditioning control device 6, the abnormality signal S6 is input to the determination unit 61. If the abnormality signal S6 is received, the determination unit 61 determines that the four-way valve 12 is not a genuine product, and outputs the determination result to the notification unit 63. Accordingly, the notification unit 63 notifies the air conditioner manufacturer of the fact that the four-way valve 12 is not a genuine product. The determination result determined by the determination unit 61 and the information received from the RFID tag 5f are stored in the storage unit 62, and are used for future analysis or the like.

The RFID tag 5g acquires the discharge-side pressure of the compressor 11 from the discharge-side pressure sensor 47. This sensor information is input to the abnormality detection unit 57 via the sensor information acquisition unit 55. The abnormality detection unit 57 detects an abnormality from the sensor information on the basis of the conditions stored in the storage unit 56. Specifically, in a case where a difference between sensor values before and after replacement of the discharge-side pressure sensor during stable operation is equal to or more than a predetermined threshold value set to a value larger than a normal value, an abnormality is determined. In a case where the abnormality is detected by the abnormality detection unit 57, an abnormality signal S7 is transmitted to the air conditioning control device 6 via the communication module 51. In the air conditioning control device 6, the abnormality signal S7 is input to the determination unit 61. If the abnormality signal S7 is received, the determination unit 61 determines that the discharge-side pressure sensor 47 is not a genuine product, and outputs the determination result to the notification unit 63. Accordingly, the notification unit 63 notifies the air conditioner manufacturer of the fact that the discharge-side pressure sensor 47 is not a genuine product. The determination result determined by the determination unit 61 and the information received from the RFID tag 5g are stored in the storage unit 62, and are used for future analysis or the like. Instead of the discharge-side pressure or by additionally detecting the suction-side pressure and performing the same determination also regarding this suction-side pressure, the same determination may be performed also regarding the suction-side pressure sensor that detects the suction-side pressure.

As described above, in the air conditioning system 1, in the individual RFID tags 5a to 5g, the sensor information acquisition unit 55 acquires the sensor information from the individual corresponding sensors 41 to 48, and the abnormality detection unit 57 detects abnormalities on the basis of the various conditions stored in the sensor information and the storage unit 56. As a result, in a case where the abnormalities are detected, the abnormality signals S1 to S7 are transmitted to the air conditioning control device 6 via the communication module 51. In the air conditioning control device 6, the abnormality signals S1 to S7 are input to the determination unit 61, and whether or not products are genuine is determined in accordance with the abnormality signals S1 to S7. In a case where it is determines that the products are not genuine, information on the event is output to the notification unit 63, and information on devices, functional components, or sensors determined not to be the genuine products is transmitted to an air conditioner manufacturer.

As described above, according to the air conditioning system 1 related to the present embodiment, the RFID tags 5 that receive the sensor information from at least one of the sensors 41 to 48 provided within the air conditioning system 1 are provided, and transmit the abnormality signals S1 to S7 to the air conditioning control device 6 from the RFID tags 5, for example, in a case where a sensor value is equal to or more than a predetermined threshold value set to a value larger than a normal value of a genuine product or in a case where a difference between sensor values during stable operation before and after component replacement shows a value equal to or more than a variation in components characteristics of genuine products.

The air conditioning control device 6 discriminates devices, functional components, or sensors that are not genuine products, in accordance with the received abnormality signals S1 to S6 if the abnormality signals S1 to S6 are received. Then, an air conditioner manufacturer is notified of information on the devices, the functional components, or sensors that are determined not to be genuine products via the notification unit 63. Acccordingly, it is possible for the air conditioner manufacturer to easily ascertain the components that are not genuine products being used.

In this way, according to the air conditioning system 1 related to the present embodiment, whether or not abnormalities occur in the operation of the individual electromagnetic valves or the state of the refrigerant is determined by analyzing the sensor values detected by the sensors 41 to 48 disposed within the air conditioning system 1 instead of simply determining whether products are genuine on the basis of the identification information stored in the RFID tags 5, and whether or not components other than genuine products are used is determined on the basis of the determination results. Hence, it is possible to detect the use of components that are not genuine products, even when a user engages in counterfeiting by attaching an RFID tag, which was attached to a genuine product, to a component that is not a genuine product.

In the above-described present embodiment, the RFID tags 5 transmit the abnormality signals S1 to S7 o the air conditioning control device 6. However, the sensor information received from the various sensors 41 to 48 may be transmitted from the RFID tags 5 to the air conditioning control device 6. In this case, the air conditioning control device 6 is provided with the function of the abnormality detection unit 57, abnormalities are detected in the air conditioning control device 6, and the determination unit 61 determines whether or not products are genuine on the basis of the abnormality detection results.

In the present embodiment, the abnormality signals are transmitted from the RFID tags 5 to the air conditioning control device 6 on the basis of the sensor information, the air conditioning control device 6 determines whether or not products are genuine. For example, however, the above-described various kinds of information may be transmitted from the RFID tags 5 to a mobile information terminal (for example, a notebook PC or the like) carried by a person in charge performing a maintenance check made by an air conditioner manufacturer. In this case, in a case where components that are not genuine products are detected by the determination unit 61, the person in charge in the air conditioner manufacturer may be notified of information by displaying information on the event on a liquid crystal display screen or the like. In this case, the notification unit 63 is constituted of the liquid crystal display screen or an LED lamp providing notification by visual sense, a loudspeaker providing notification by auditory sense, or the like.

The invention is not limited only to the above-described embodiments, and various modification can be made, for example, by partially or entirely combining the above-described individual embodiments, without departing from the concept of the invention.

### Reference Signs List

- 1:: AIR CONDITIONING SYSTEM
- 2:: OUTDOOR UNIT
- 3a, 3b:: INDOOR UNIT
- 5, 5a TO 5g:: RFID TAG
- 6:: AIR CONDITIONING CONTROL DEVICE
- 11:: COMPRESSOR
- 12:: FOUR-WAY VALVE
- 13:: OUTDOOR HEAT EXCHANGER
- 15:: OUTDOOR FAN
- 16:: ACCUMULATOR
- 17:: EXPANSION VALVE FOR HEATING
- 18:: LIQUID BYPASS VALVE
- 19:: HOT GAS BYPASS VALVE
- 31:: EXPANSION VALVE FOR COOLING
- 32:: INDOOR HEAT EXCHANGER
- 33:: INDOOR FAN
- 41, 42:: VALVE OPENING-CLOSING SENSOR
- 43, 44:: VALVE OPENING DEGREE SENSOR
- 45:: DISCHARGE-SIDE TEMPERATURE SENSOR
- 46:: SUCTION-SIDE TEMPERATURE SENSOR
- 47:: DISCHARGE-SIDE PRESSURE SENSOR
- 48:: SUCTION-SIDE PRESSURE SENSOR
- 51:: COMMUNICATION MODULE
- 52:: POWER SOURCE CONTROL CIRCUIT
- 53:: CONTROL UNIT
- 55:: SENSOR INFORMATION ACQUISITION UNIT
- 56:: STORAGE UNIT
- 57:: ABNORMALITY DETECTION UNIT
- 61:: DETERMINATION UNIT
- 62:: STORAGE UNIT
- 63:: NOTIFICATION UNIT
- L1:: SUCTION-SIDE PIPE
- L2:: REFRIGERANT PIPE
- L3:: LIQUID BYPASS PIPE
- L4:: DISCHARGE-SIDE PIPE
- L5:: HOT GAS BYPASS PIPE
- S1 TO S7:: ABNORMALITY SIGNAL

## Claims

1. An air conditioning system (1) in which one outdoor unit (2) and at least one indoor unit (3a, 3b) are connected to each other by a common refrigerant pipe, the air conditioning system (1) comprising:
a sensor (41-48) configured to detect information relating to a state of a device, a state of a functional component, or a state of a refrigerant, the device, the functional component, and the refrigerant being provided in the outdoor unit (2) or the indoor unit (3a, 3b);
an active-type short-distance wireless device (5a-5g) that is connected to the sensor (41-48), is configured to receive sensor information from the connected sensor, and is configured to transmit the sensor information or information relating to the sensor information; and
an information processing unit (6) that is provided so as to be capable of communicating with the short-distance wireless device (5a-5g) and that is configured to receive the sensor information or the information relating to the sensor information from the short-distance wireless device (5a-5g),
wherein the information processing unit (6) is provided with a determination unit (61) that is configured to, on the basis of the sensor information or the information relating to the sensor information, determine whether or not the device or the functional component that affects the sensor itself or the sensor information is a genuine product, **characterized in that**
the determination unit (61) is configured to compare sensor information before and after component replacement during a stable operation in which a rotational speed of a compressor (11) is maintained at a fixed value in a case where replacement of the device, the functional component, or the sensor is performed, and to determine that the replaced device, the replaced functional component, or the replaced sensor is not a genuine product when a variation equal to or more than a variation in components characteristics of genuine products appears in a result of the comparison.

2. An air conditioning system (1) in which one outdoor unit (2) and at least one indoor unit (3a, 3b) are connected to each other by a common refrigerant pipe, the air conditioning system (1) comprising:
a sensor (41-48) configured to detect information relating to a state of a device, a state of a functional component, or a state of a refrigerant, the device, the functional component, and the refrigerant being provided in the outdoor unit (2) or the indoor unit (3a, 3b);
an active-type short-distance wireless device (5a-5g) that is connected to the sensor (41-48), is configured to receive sensor information from the connected sensor, and is configured to transmit the sensor information or information relating to the sensor information; and
an information processing unit (6) that is provided so as to be capable of communicating with the short-distance wireless device (5a-5g) and that is configured to receive the sensor information or the information relating to the sensor information from the short-distance wireless device (5a-5g),
wherein the information processing unit (6) is provided with a determination unit (61) that is configured to, on the basis of the sensor information or the information relating to the sensor information, determine whether or not the device or the functional component that affects the sensor itself or the sensor information is a genuine product, **characterized in that**
the sensor is a valve opening-closing sensor (41, 42) configured to detect opening-closing information of an electromagnetic valve (18, 19),
the short-distance wireless device (5a, 5b) is configured to receive the opening-closing information of the electromagnetic valve (18, 19) as the sensor information, and
the determination unit (61) is configured to determine that the electromagnetic valve is not a genuine product in a case where the number of times of opening and closing of the electromagnetic valve (18, 19) is equal to or more than a predetermined number of times higher than a normal number of times of opening and closing of the genuine product within a predetermined period.

3. An air conditioning system (1) in which one outdoor unit (2) and at least one indoor unit (3a, 3b) are connected to each other by a common refrigerant pipe, the air conditioning system (1) comprising:
a sensor (41-48) configured to detect information relating to a state of a device, a state of a functional component, or a state of a refrigerant, the device, the functional component, and the refrigerant being provided in the outdoor unit (2) or the indoor unit (3a, 3b);
an active-type short-distance wireless device (5a-5g) that is connected to the sensor (41-48), is configured to receive sensor information from the connected sensor, and is configured to transmit the sensor information or information relating to the sensor information; and
an information processing unit (6) that is provided so as to be capable of communicating with the short-distance wireless device (5a-5g) and that is configured to receive the sensor information or the information relating to the sensor information from the short-distance wireless device (5a-5g),
wherein the information processing unit (6) is provided with a determination unit (61) that is configured to, on the basis of the sensor information or the information relating to the sensor information, determine whether or not the device or the functional component that affects the sensor itself or the sensor information is a genuine product, **characterized in that**
the sensor is a valve opening degree sensor (43, 44) configured to detect a valve opening degree of an electromagnetic valve (17, 31),
the short-distance wireless device (5c, 5d) is configured to receive valve opening degree information of the electromagnetic valve (17, 31) as the sensor information, and
the determination unit (61) is configured to determine that the electromagnetic valve (17, 31) is not a genuine product in a case where a total number of pulses applied to bring the electromagnetic valve (17, 31) into a fully open state from a fully closed state is equal to or more than a predetermined threshold value higher than a total number of pulses of a genuine product.

4. An air conditioning system (1) in which one outdoor unit (2) and at least one indoor unit (3a, 3b) are connected to each other by a common refrigerant pipe, the air conditioning system (1) comprising:
a sensor (41-48) configured to detect information relating to a state of a device, a state of a functional component, or a state of a refrigerant, the device, the functional component, and the refrigerant being provided in the outdoor unit (2) or the indoor unit (3a, 3b);
an active-type short-distance wireless device (5a-5g) that is connected to the sensor (41-48), is configured to receive sensor information from the connected sensor, and is configured to transmit the sensor information or information relating to the sensor information; and
an information processing unit (6) that is provided so as to be capable of communicating with the short-distance wireless device (5a-5g) and that is configured to receive the sensor information or the information relating to the sensor information from the short-distance wireless device (5a-5g),
wherein the information processing unit (6) is provided with a determination unit (61) that is configured to, on the basis of the sensor information or the information relating to the sensor information, determine whether or not the device or the functional component that affects the sensor itself or the sensor information is a genuine product, **characterized in that**
the sensor is a discharge-side temperature sensor (45) configured to detects a discharge-side temperature of a compressor (11), or a suction-side temperature sensor (46) configured to detect a suction-side temperature of the compressor (11),
the short-distance wireless device (5e, 5f) is configured to receive the discharge-side temperature or the suction-side temperature as the sensor information, and
the determination unit (61) is configured to determine that a four-way valve (12) is not a genuine product in a case where the number of times at which the discharge-side temperature exceeds a predetermined temperature threshold value set to a temperature higher than a discharge-side temperature of a genuine product is equal to or more than a predetermined number of times within a predetermined period, or in a case where the number of times at which a difference between the suction-side temperature and a suction pressure saturation temperature exceeds a predetermined temperature threshold value set to a temperature higher than a temperature difference in a genuine product is equal to or more than a predetermined number of times within a predetermined period.

5. The air conditioning system (1) according to any one of Claims 1 to 4,
wherein the information processing device (6) is an air conditioning control device configured to control the entire air conditioning.

6. The air conditioning system (1) according to any one of Claims 1 to 4,
wherein the information processing device (6) is a portable terminal carried by a person in charge of performing maintenance checks.

## Patentansprüche

1. Klimatisierungssystem (1), bei dem eine Außeneinheit (2) und mindestens eine Inneneinheit (3a, 3b) über eine gemeinsame Kältemittelleitung miteinander verbunden sind, wobei das Klimatisierungssystem (1) Folgendes umfasst:
einen Sensor (41-48), der dazu ausgelegt ist, Informationen, die einen Zustand einer Vorrichtung, einen Zustand einer Funktionskomponente oder einen Zustand eines Kältemittels betreffen, zu detektieren, wobei die Vorrichtung, die Funktionskomponente und das Kältemittel in der Außeneinheit (2) oder in der Inneneinheit (3a, 3b) bereitgestellt sind;
eine aktive drahtlose Kurzstreckenvorrichtung (5a-5g), die mit dem Sensor (41-48) verbunden ist, dazu ausgelegt ist, Sensorinformationen vom verbundenen Sensor zu empfangen, und dazu ausgelegt ist, die Sensorinformationen oder Informationen, die die Sensorinformationen betreffen, zu übertragen; und
eine Informationsverarbeitungseinheit (6), die bereitgestellt ist, um in der Lage zu sein, mit der drahtlosen Kurzstreckenvorrichtung (5a-5g) zu kommunizieren, und die dazu ausgelegt ist, die Sensorinformationen oder die Informationen, die die Sensorinformationen betreffen, von der drahtlosen Kurzstreckenvorrichtung (5a-5g) zu empfangen,
wobei die Informationsverarbeitungseinheit (6) mit einer Bestimmungseinheit (61) versehen ist, die dazu ausgelegt ist, auf Basis der Sensorinformationen oder der Informationen, die die Sensorinformationen betreffen, zu bestimmen, ob die Vorrichtung oder die Funktionskomponente, die den Sensor selbst oder die Sensorinformationen beeinträchtigt, ein echtes Produkt ist oder nicht, **dadurch gekennzeichnet, dass**
die Bestimmungseinheit (61) dazu ausgelegt ist, in einem Fall, in dem ein Austausch der Vorrichtung, der Funktionskomponente oder des Sensors durchgeführt wird, während eines stabilen Betriebs, bei dem die Drehgeschwindigkeit eines Verdichters (11) auf einem festen Wert gehalten wird, Sensorinformationen vor und nach einem Komponentenaustausch zu vergleichen und zu bestimmen, dass die ausgetauschte Vorrichtung, die ausgetauschte Funktionskomponente oder der ausgetauschte Sensor kein echtes Produkt ist, wenn in einem Ergebnis des Vergleichs eine Abweichung erscheint, die gleich oder mehr als eine Abweichung von Komponenteneigenschaften von echten Produkten ist.

2. Klimatisierungssystem (1), bei dem eine Außeneinheit (2) und mindestens eine Inneneinheit (3a, 3b) über eine gemeinsame Kältemittelleitung miteinander verbunden sind, wobei das Klimatisierungssystem (1) Folgendes umfasst:
einen Sensor (41-48), der dazu ausgelegt ist, Informationen, die einen Zustand einer Vorrichtung, einen Zustand einer Funktionskomponente oder einen Zustand eines Kältemittels betreffen, zu detektieren, wobei die Vorrichtung, die Funktionskomponente und das Kältemittel in der Außeneinheit (2) oder in der Inneneinheit (3a, 3b) bereitgestellt sind;
eine aktive drahtlose Kurzstreckenvorrichtung (5a-5g), die mit dem Sensor (41-48) verbunden ist, dazu ausgelegt ist, Sensorinformationen vom verbundenen Sensor zu empfangen, und dazu ausgelegt ist, die Sensorinformationen oder Informationen, die die Sensorinformationen betreffen, zu übertragen; und
eine Informationsverarbeitungseinheit (6), die bereitgestellt ist, um in der Lage zu sein, mit der drahtlosen Kurzstreckenvorrichtung (5a-5g) zu kommunizieren, und die dazu ausgelegt ist, die Sensorinformationen oder die Informationen, die die Sensorinformationen betreffen, von der drahtlosen Kurzstreckenvorrichtung (5a-5g) zu empfangen,
wobei die Informationsverarbeitungseinheit (6) mit einer Bestimmungseinheit (61) versehen ist, die dazu ausgelegt ist, auf Basis der Sensorinformationen oder der Informationen, die die Sensorinformationen betreffen, zu bestimmen, ob die Vorrichtung oder die Funktionskomponente, die den Sensor selbst oder die Sensorinformationen beeinträchtigt, ein echtes Produkt ist oder nicht, **dadurch gekennzeichnet, dass**
der Sensor ein ein Ventil öffnender/schließender Sensor (41, 42) ist, der dazu ausgelegt ist, Öffnungs-/Schließinformationen eines elektromagnetischen Ventils (18, 19) zu detektieren,
die drahtlose Kurzstreckenvorrichtung (5a, 5b) dazu ausgelegt ist, die Öffnungs-/Schließinformationen des elektromagnetischen Ventils (18, 19) als die Sensorinformationen zu empfangen, und
die Bestimmungseinheit (61) dazu ausgelegt ist, in einem Fall, in dem die Anzahl von Malen des Öffnens und des Schließens des elektromagnetischen Ventils (18, 19) innerhalb einer vorbestimmten Periode gleich oder mehr ist als eine vorbestimmte Anzahl von Malen ist, die höher ist als eine normale Anzahl von Malen des Öffnens und des Schließens des echten Produkts ist, zu bestimmen, dass das elektromagnetische Ventil kein echtes Produkt ist.

3. Klimatisierungssystem (1), bei dem eine Außeneinheit (2) und mindestens eine Inneneinheit (3a, 3b) über eine gemeinsame Kältemittelleitung miteinander verbunden sind, wobei das Klimatisierungssystem (1) Folgendes umfasst:
einen Sensor (41-48), der dazu ausgelegt ist, Informationen, die einen Zustand einer Vorrichtung, einen Zustand einer Funktionskomponente oder einen Zustand eines Kältemittels betreffen, zu detektieren, wobei die Vorrichtung, die Funktionskomponente und das Kältemittel in der Außeneinheit (2) oder in der Inneneinheit (3a, 3b) bereitgestellt sind;
eine aktive drahtlose Kurzstreckenvorrichtung (5a-5g), die mit dem Sensor (41-48) verbunden ist, dazu ausgelegt ist, Sensorinformationen vom verbundenen Sensor zu empfangen, und dazu ausgelegt ist, die Sensorinformationen oder Informationen, die die Sensorinformationen betreffen, zu übertragen; und
eine Informationsverarbeitungseinheit (6), die bereitgestellt ist, um in der Lage zu sein, mit der drahtlosen Kurzstreckenvorrichtung (5a-5g) zu kommunizieren, und die dazu ausgelegt ist, die Sensorinformationen oder die Informationen, die die Sensorinformationen betreffen, von der drahtlosen Kurzstreckenvorrichtung (5a-5g) zu empfangen,
wobei die Informationsverarbeitungseinheit (6) mit einer Bestimmungseinheit (61) versehen ist, die dazu ausgelegt ist, auf Basis der Sensorinformationen oder der Informationen, die die Sensorinformationen betreffen, zu bestimmen, ob die Vorrichtung oder die Funktionskomponente, die den Sensor selbst oder die Sensorinformationen beeinträchtigt, ein echtes Produkt ist oder nicht, **dadurch gekennzeichnet, dass**
der Sensor ein Ventilöffnungsgradsensor (43, 44) ist, der dazu ausgelegt ist, einen Ventilöffnungsgrad eines elektromagnetischen Ventils (17, 31) zu detektieren,
die drahtlose Kurzstreckenvorrichtung (5c, 5d) dazu ausgelegt ist, die Ventilöffnungsgradinformationen des elektromagnetischen Ventils (17, 31) als die Sensorinformationen zu empfangen, und
die Bestimmungseinheit (61) dazu ausgelegt ist, in einem Fall, in dem eine Gesamtzahl von Impulsen, die angelegt werden, um das elektromagnetische Ventil (17, 31) aus einem ganz geschlossenen Zustand in einen ganz geöffneten Zustand zu bringen, gleich oder mehr als ein vorbestimmter Schwellwert ist, der höher ist als eine Gesamtzahl von Impulsen eines echten Produkts, zu bestimmen, dass das elektromagnetische Ventil (17, 31) kein echtes Produkt ist.

4. Klimatisierungssystem (1), bei dem eine Außeneinheit (2) und mindestens eine Inneneinheit (3a, 3b) über eine gemeinsame Kältemittelleitung miteinander verbunden sind, wobei das Klimatisierungssystem (1) Folgendes umfasst:
einen Sensor (41-48), der dazu ausgelegt ist, Informationen, die einen Zustand einer Vorrichtung, einen Zustand einer Funktionskomponente oder einen Zustand eines Kältemittels betreffen, zu detektieren, wobei die Vorrichtung, die Funktionskomponente und das Kältemittel in der Außeneinheit (2) oder in der Inneneinheit (3a, 3b) bereitgestellt sind;
eine aktive drahtlose Kurzstreckenvorrichtung (5a-5g), die mit dem Sensor (41-48) verbunden ist, dazu ausgelegt ist, Sensorinformationen vom verbundenen Sensor zu empfangen, und dazu ausgelegt ist, die Sensorinformationen oder Informationen, die die Sensorinformationen betreffen, zu übertragen; und
eine Informationsverarbeitungseinheit (6), die bereitgestellt ist, um in der Lage zu sein, mit der drahtlosen Kurzstreckenvorrichtung (5a-5g) zu kommunizieren, und die dazu ausgelegt ist, die Sensorinformationen oder die Informationen, die die Sensorinformationen betreffen, von der drahtlosen Kurzstreckenvorrichtung (5a-5g) zu empfangen,
wobei die Informationsverarbeitungseinheit (6) mit einer Bestimmungseinheit (61) versehen ist, die dazu ausgelegt ist, auf Basis der Sensorinformationen oder der Informationen, die die Sensorinformationen betreffen, zu bestimmen, ob die Vorrichtung oder die Funktionskomponente, die den Sensor selbst oder die Sensorinformationen beeinträchtigt, ein echtes Produkt ist oder nicht, **dadurch gekennzeichnet, dass**
der Sensor ein auslassseitiger Temperatursensor (45) ist, der dazu ausgelegt ist, eine auslassseitige Temperatur eines Verdichters (11) zu detektieren, oder ein ansaugseitiger Temperatursensor (46) ist, der dazu ausgelegt ist, eine ansaugseitige Temperatur des Verdichters (11) zu detektieren,
die drahtlose Kurzstreckenvorrichtung (5e, 5f) dazu ausgelegt ist, die auslassseitige Temperatur oder die ansaugseitige Temperatur als die Sensorinformationen zu empfangen, und
die Bestimmungseinheit (61) dazu ausgelegt ist, in einem Fall, in dem die Anzahl von Malen, die die auslassseitige Temperatur einen vorbestimmten Temperaturschwellwert überschreitet, der auf eine Temperatur eingestellt ist, die höher ist als eine auslassseitige Temperatur eines echten Produkts, innerhalb einer vorbestimmten Periode gleich oder mehr ist als eine vorbestimmte Anzahl von Malen, oder in einem Fall, in dem die Anzahl von Malen, die die Differenz zwischen der ansaugseitigen Temperatur und einer Ansaugdrucksättigungstemperatur einen vorbestimmten Temperaturschwellwert überschreitet, der auf eine Temperatur eingestellt ist, die höher ist als eine Temperaturdifferenz bei einem echten Produkt, innerhalb einer vorbestimmten Periode gleich oder mehr als eine vorbestimmte Anzahl von Malen ist, zu bestimmen, dass ein Vierwegeventil (12) kein echtes Produkt ist.

5. Klimatisierungssystem (1) nach einem der Ansprüche 1 bis 4,
wobei die Informationsverarbeitungsvorrichtung (6) eine Klimatisierungssteuervorrichtung ist, die dazu ausgelegt ist, die gesamte Klimatisierung zu steuern.

6. Klimatisierungssystem (1) nach einem der Ansprüche 1 bis 4,
wobei die Informationsverarbeitungsvorrichtung (6) ein tragbares Endgerät ist, das von einer Person getragen wird, die für die Durchführung von Wartungsprüfungen zuständig ist.

## Revendications

1. Système de climatisation (1) dans lequel une unité extérieure (2) et au moins une unité intérieure (3a, 3b) sont connectées entre elles par une conduite de réfrigérant commune, le système de climatisation (1) comprenant :
un capteur (41-48) configuré pour détecter des informations concernant un état d'un dispositif, un état d'un composant fonctionnel, ou un état d'un réfrigérant, le dispositif, le composant fonctionnel, et le réfrigérant étant prévus dans l'unité extérieure (2) ou l'unité intérieure (3a, 3b) ;
un dispositif sans fil à courte distance (5a-5g) de type actif, qui est connecté au capteur (41-48), qui est configuré pour recevoir des informations de capteur provenant du capteur connecté, et qui est configuré pour transmettre les informations de capteur ou des informations concernant les informations de capteur ; et
une unité de traitement des informations (6) qui est prévue de manière à être apte à communiquer avec le dispositif sans fil à courte distance (5a-5g) et qui est configurée pour recevoir les informations de capteur ou les informations concernant les informations de capteur provenant du dispositif sans fil à courte distance (5a-5g),
dans lequel l'unité de traitement des informations (6) est pourvue d'une unité de détermination (61) qui est configurée pour, sur la base des informations de capteur ou des informations concernant les informations de capteur, déterminer si le dispositif ou le composant fonctionnel, qui affecte le capteur lui-même ou les informations de capteur, est ou non un produit authentique, **caractérisé en ce que**
l'unité de détermination (61) est configurée pour comparer des informations de capteur avant et après le remplacement de composant pendant un fonctionnement stable où une vitesse de rotation d'un compresseur (11) est maintenue à une valeur fixe dans le cas où le remplacement du dispositif, du composant fonctionnel, ou du capteur est effectué, et pour déterminer que le dispositif remplacé, le composant fonctionnel remplacé ou le capteur remplacé n'est pas un produit authentique :
lorsqu'une variation supérieure ou égale à une variation de caractéristiques de composants de produits authentiques apparaît dans un résultat de la comparaison.

2. Système de climatisation (1) dans lequel une unité extérieure (2) et au moins une unité intérieure (3a, 3b) sont connectées entre elles par une conduite de réfrigérant commune, le système de climatisation (1) comprenant :
un capteur (41-48) configuré pour détecter des informations concernant un état d'un dispositif, un état d'un composant fonctionnel, ou un état d'un réfrigérant, le dispositif, le composant fonctionnel, et le réfrigérant étant prévus dans l'unité extérieure (2) ou l'unité intérieure (3a, 3b) ;
un dispositif sans fil à courte distance (5a-5g) de type actif qui est connecté au capteur (41-48), qui est configuré pour recevoir des informations de capteur provenant du capteur connecté, et qui est configuré pour transmettre les informations de capteur ou information concernant les informations de capteur ; et
une unité de traitement des informations (6) qui est prévue de manière à être apte à communiquer avec le dispositif sans fil à courte distance (5a-5g) et qui est configurée pour recevoir les informations de capteur ou les informations concernant les informations de capteur provenant du dispositif sans fil à courte distance (5a-5g),
dans lequel l'unité de traitement des informations (6) est pourvue d'une unité de détermination (61) qui est configurée pour, sur la base des informations de capteur ou des informations concernant les informations de capteur, déterminer si le dispositif ou le composant fonctionnel, qui affecte le capteur lui-même ou les informations de capteur, est ou non un produit authentique, **caractérisé en ce que**
le capteur est un capteur d'ouverture / de fermeture de vanne (41, 42) configuré pour détecter des informations d'ouverture / de fermeture d'une électrovanne (18, 19),
le dispositif sans fil à courte distance (5a, 5b) est configuré pour recevoir les informations d'ouverture / de fermeture de l'électrovanne (18, 19) comme informations de capteur, et
l'unité de détermination (61) est configurée pour déterminer que l'électrovanne n'est pas un produit authentique dans le cas où le nombre de fois d'ouverture et de fermeture de l'électrovanne (18, 19) est supérieur ou égal à un nombre de fois prédéterminé supérieur à un nombre de fois normal d'ouverture et de fermeture du produit authentique dans une période prédéterminée.

3. Système de climatisation (1) dans lequel une unité extérieure (2) et au moins une unité intérieure (3a, 3b) sont connectées entre elles par une conduite de réfrigérant commune, le système de climatisation (1) comprenant :
un capteur (41-48) configuré pour détecter des informations concernant un état d'un dispositif, un état d'un composant fonctionnel, ou un état d'un réfrigérant, le dispositif, le composant fonctionnel, et le réfrigérant étant prévus dans l'unité extérieure (2) ou l'unité intérieure (3a, 3b) ;
un dispositif sans fil à courte distance (5a-5g) de type actif qui est connecté au capteur (41-48), qui est configuré pour recevoir des informations de capteur provenant du capteur connecté, et qui est configuré pour transmettre les informations de capteur ou des informations concernant les informations de capteur ; et
une unité de traitement des informations (6) qui est prévue de manière à être apte à communiquer avec le dispositif sans fil à courte distance (5a-5g) et qui est configurée pour recevoir les informations de capteur ou les informations concernant les informations de capteur provenant du dispositif sans fil à courte distance (5a-5g),
dans lequel l'unité de traitement des informations (6) est pourvue d'une unité de détermination (61) qui est configurée pour, sur la base des informations de capteur ou des informations concernant les informations de capteur, déterminer si le dispositif ou le composant fonctionnel, qui affecte le capteur lui-même ou les informations de capteur, est ou non un produit authentique, **caractérisé en ce que**
le capteur est un détecteur de degré d'ouverture de vanne (43, 44) configuré pour détecter un degré d'ouverture de vanne d'un électrovanne (17, 31),
le dispositif sans fil à courte distance (5c, 5d) est configuré pour recevoir des informations de degré d'ouverture de vanne de l'électrovanne (17, 31) comme informations de capteur, et
l'unité de détermination (61) est configurée pour déterminer que l'électrovanne (17, 31) n'est pas un produit authentique dans le cas où un nombre total d'impulsions appliquées pour amener l'électrovanne (17, 31) à un état complètement ouvert à partir d'un état complètement fermé est supérieur ou égal à une valeur seuil prédéterminée supérieure à un nombre total d'impulsions d'un produit authentique.

4. Système de climatisation (1) dans lequel une unité extérieure (2) et au moins une unité intérieure (3a, 3b) sont connectées entre elles par une conduite de réfrigérant commune, le système de climatisation (1) comprenant :
un capteur (41-48) configuré pour détecter des informations concernant un état d'un dispositif, un état d'un composant fonctionnel, ou un état d'un réfrigérant, le dispositif, le composant fonctionnel, et le réfrigérant étant prévu dans l'unité extérieure (2) ou l'unité intérieure (3a, 3b) ;
un dispositif sans fil à courte distance (5a-5g) de type actif qui est connecté au capteur (41-48), qui est configuré pour recevoir des informations de capteur provenant du capteur connecté, et qui est configuré pour transmettre les informations de capteur ou des informations concernant les informations de capteur ; et
une unité de traitement des informations (6) qui est prévue de manière à être apte à communiquer avec le dispositif sans fil à courte distance (5a-5g) et qui est configurée pour recevoir les informations de capteur ou les informations concernant les informations de capteur provenant du dispositif sans fil à courte distance (5a-5g),
dans lequel l'unité de traitement des informations (6) est pourvue d'une unité de détermination (61) qui est configurée pour, sur la base des informations de capteur ou des informations concernant les informations de capteur, déterminer si le dispositif ou le composant fonctionnel, qui affecte le capteur lui-même ou les informations de capteur, est ou non un produit authentique, **caractérisé en ce que**
le capteur est un capteur de température côté évacuation (45) configuré pour détecter une température côté évacuation d'un compresseur (11), ou un capteur de température côté aspiration (46) configuré pour détecter une température côté aspiration du compresseur (11),
le dispositif sans fil à courte distance (5e, 5f) est configuré pour recevoir la température côté évacuation ou la température côté aspiration comme informations de capteur, et
l'unité de détermination (61) est configurée pour déterminer qu'une vanne à quatre voies (12) n'est pas un produit authentique dans le cas où le nombre de fois où la température côté évacuation dépasse une valeur seuil de température prédéterminée fixée à une température supérieure à une température côté évacuation d'un produit authentique est supérieur ou égal à un nombre de fois prédéterminé dans une période prédéterminée, ou dans le cas où le nombre de fois où une différence entre la température côté aspiration et une température de saturation de pression d'aspiration dépasse une valeur seuil de température prédéterminée fixée à une température supérieure à une différence de température dans un produit authentique est supérieur ou égal à un nombre de fois prédéterminé dans une période prédéterminée.

5. Système de climatisation (1) selon l'une quelconque des revendications 1 à 4,
dans lequel le dispositif de traitement des informations (6) est un dispositif de commande de climatisation configuré pour commander toute la climatisation.

6. Système de climatisation (1) selon l'une quelconque des revendications 1 à 4,
dans lequel le dispositif de traitement des informations (6) est un terminal portable porté par une personne chargée d'effectuer les vérifications de maintenance.
